# EUROPÄISCHE PATENTSCHRIFT

(11) **EP 3 496 999 B1**
(45) Veröffentlichungstag und Bekanntmachung des Hinweises auf die Patenterteilung: **07.10.2020**
(21) Anmeldenummer: 17749687.4
(22) Anmeldetag: 01.08.2017
(51) Int. Cl.: B62D 35/00

(54) **HECKSPOILER UND FAHRZEUG MIT EINEM DERARTIGEN HECKSPOILER**
REAR SPOILER AND VEHICLE COMPRISING SUCH A REAR SPOILER
BECQUET ARRIÈRE ET VÉHICULE ÉQUIPÉ D'UN TEL BECQUET ARRIÈRE

(30) Priorität: 10.08.2016 DE 102016214834
(43) Veröffentlichungstag der Anmeldung: 19.06.2019
(73) Patentinhaber: Volkswagen Aktiengesellschaft, 38440 Wolfsburg (DE)
(72) Erfinder: GROVE, Martin, 38518 Gifhorn (DE); MASSARCZYK, Björn-Dennis, 38442 Wolfsburg (DE)
(86) Internationale Anmeldenummer: PCT/EP2017/069392
(87) Internationale Veröffentlichungsnummer: WO 2018/029036

(56) Entgegenhaltungen:
- EP-A1- 2 842 842
- WO-A1-2016/083705
- US-A1- 2016 096 560
- US-A1- 2016 221 614

## Beschreibung

Die Erfindung betrifft einen Heckspoiler für ein Fahrzeug, insbesondere Kraftfahrzeug, nach dem Oberbegriff des Patentanspruchs 1 der Erfindung. Gemäß Patentanspruch 9 der Erfindung betrifft dieselbe ferner ein Fahrzeug, insbesondere Kraftfahrzeug, mit einem derartigen Heckspoiler.

Aus der Praxis ist es seit geraumer Zeit bekannt, dass mittels Luftleitvorrichtungen an Kraftfahrzeugen in Form von Spoilern, insbesondere Front-, Dach- und/oder Heckspoilern, sowohl die Aerodynamik des Kraftfahrzeugs als auch dessen Fahrverhalten vorteilhaft beeinflusst werden kann. Bei besagten Spoilern handelt es sich überwiegend um quer zur Fahrzeuglängsrichtung angeordnete Profilelemente, die gegebenenfalls den Querschnitt eines an sich bekannten Flügels aufweisen können. Des Weiteren sind insbesondere in ihrer Anstellung zur die Außenkontur des Kraftfahrzeugs umströmenden Luft verstellbare Spoiler bekannt, die es ermöglichen, im Hinblick auf aktuelle Fahrbedingungen und/oder gewünschte Fahreigenschaften des Kraftfahrzeugs optimal eingestellt zu werden oder sich selbsttätig einstellen. So ist aus der DE 38 28 752 A1 eine elektronische Steuerung von Spoilern an Kraftfahrzeugen bekannt, die in Abhängigkeit von Fahrparametern, wie Geschwindigkeit, Beschleunigung, Bremsung und Kurvenfahrt, das Fahrzeug optimal stabilisieren soll. Hierzu sind geeignete Messfühler respektive Sensoren vorgesehen, die ihre Messwerte einer Steuereinheit zur Verfügung stellen, die wiederum Steuersignale zur Ansteuerung der Verstelleinrichtungen der Spoiler generiert. Ein derart verstellbarer Spoiler geht jedoch mit erheblichen mechanischen sowie mess- und regelungstechnischen Aufwand einher.
Aus der DE 20 2010 012 288 U1 ist ferner eine dynamische Spoilerlippe für Automobile bekannt, welche mittels zweier sogenannter Spannungsbögen an ihren Enden mit der Karosserie des Fahrzeugs verbunden ist. Die Spannnungsbögen bestehen aus einem elastischen Material, welches den Bögen die Eigenschaften eines Federsystems gibt. Ausgehend von einer neutralen Position der Spoilerlippe sollen die Spannungsbögen durch Verformung derselben ein Herabziehen bzw. Heraufdrücken der mit diesen verbundenen Spoilerlippe erlauben. Je höher die Fahrzeuggeschwindigkeit ist, desto höher sind die auftretenden Kräfte auf die Spoilerfläche. Durch besagte Kräfte werden die Spannungsbögen verformt, woraus eine Veränderung der Position der Spoilerlippe resultiert. Die DE 10 2010 021 187 A1 beschreibt des Weiteren einen Frontspoiler eines Kraftfahrzeugs, mit einer mittels eines Betätigungselements verstellbaren Spoilerlippe. Die Spoilerlippe weist einen oberen und einen unteren, fahrbahnnahen Abschnitt auf, welcher untere Abschnitt infolge Beschädigung und/oder aufgrund besonderer Designansprüche austauschbar ist.

Aus der EP 2 842 842 A1 ist ein Seitenspoiler für ein Fahrzeug, insbesondere Kraftfahrzeug, bekannt, welcher mit einer Fahrzeugkarosserie starr verbunden ist, wobei der Seitenspoiler einen Spoilergrundkörper aufweist, dem eine Windabrisskante ausbildende Spoilerlippe zugeordnet oder zuordenbar ist, die gegen eine neue Spoilerlippe austauschbar ist.

Aus der US 2016/221614 A1 ist ein Spoiler für eine Heckklappe bekannt, welcher eine kundenspezifische Haut aus bevorzugt einem duroplastischen oder thermoplastischen Material und ein Verstärkungselement zum Verstärken besagter Haut aufweist. Das Verstärkungselement weist eine Kerbe auf, die mit einer Rippe der kundespezifischen Haut zusammenwirkt und eine relative vertikale Bewegung zwischen Haut und Verstärkungselement verhindert. Darüber hinaus sind zusätzlich Sicherungsmittel, wie beispielsweise Schrauben, zur Befestigung der kundenspezifischen Haut an der Heckklappe vorgesehen. Das Verstärkungselement ist bevorzugt mit der Heckklappe durch Kleben verbunden und bildet mit derselben einen Hohlkörper oder Kasten aus.

Aus der DE 10 2012 101 897 A1 ist ein Heckspoiler für ein Kraftfahrzeug bekannt, welcher eine Oberschale und eine Unterschale umfasst, wobei die Oberschale eine hintere Luftabrisskante aufweist. Der Heckspoiler ist über eine T-förmige Halteleiste und unter Vermittlung eines Trägerteils mit einer Struktur der Heckklappe des Kraftfahrzeugs verbunden. Die Abrisskante ist durch Einsatzteile gebildet, welche in unterschiedlichen Ausführungsvarianten zur Verfügung stehen und beispielsweise ein Einsatzteil einer Erstausstattung ersetzen können.

Aus der DE 10 2008 036 283 A1 ist eine heckseitige Luftleitvorrichtung für ein Kraftfahrzeug bekannt, welche aus einem in eine Heckklappe integrierten Vorderteil und aus einem außenhautbündig an das Vorderteil angeschlossenen und mit diesem verbundenen Hinterteil zusammengesetzt ist. Das vorzugsweise aus Kunststoff gefertigte Hinterteil besteht aus einem inneren Trägerteil und einem mit diesem durch beispielsweise Kleben verbunden Außenteil. Das Hinterteil wird von hinten auf die Halteleiste des Vorderteils aufgeschoben, wobei eine Verrastung in X-Richtung (Fahrzeuglängsrichtung) zwischen den beiden Teilen erfolgt. Aufgabe der Erfindung ist es, einen Heckspoiler für ein Fahrzeug, insbesondere Kraftfahrzeug, mit einem Spoiler-Grundkörper hoher Steifigkeit und einer Spoilerlippe zu schaffen, welcher bei Vermeidung aufwendiger Verstelleinrichtungen sowie Mess- und Regelungstechnik eine Anpassung der Aerodynamik des Fahrzeugs bezüglich eines vorbestimmten Fahrverhaltens des Fahrzeugs oder ausgehend von einem bestimmten Fahrverhalten bezüglich eines gewünschten anderen Fahrverhaltens erlaubt. Ferner ist es Aufgabe der Erfindung, ein Fahrzeug, insbesondere Kraftfahrzeug, mit einem derartigen Heckspoiler zur Verfügung zu stellen.

Ausgehend von einem Heckspoiler für ein Fahrzeug, insbesondere Kraftfahrzeug, welcher mit einer Fahrzeugkarosserie oder einer Hecklappe oder Hecktür des Fahrzeugs starr verbunden ist, wobei der Heckspoiler einen Spoiler-Grundkörper aufweist, dem zwei oder mehr, jeweils eine Windabrisskante ausbildende Spoilerlippen zugeordnet oder zuordenbar sind, aus denen gewählt werden kann oder welche gegeneinander austauschbar sind, wird die gestellte Aufgabe dadurch gelöst, dass der Spoiler-Grundkörper durch zwei Schalenelemente gebildet ist, die sowohl untereinander als auch mit der Fahrzeugkarosserie oder einer Heckklappe oder Hecktür des Fahrzeugs starr bzw. fest verbunden sind und ein geschlossenes Hohlprofil ausbilden.

Durch diese Maßnahme ist zum einen vorteilhaft die Möglichkeit eröffnet, allein durch Austausch einer aktuell montierten Spoilerlippe gegen eine andere Spoilerlippe sowohl die Aerodynamik des Fahrzeugs als auch das Fahrverhalten desselben zu ändern, ohne auf aufwendige Verstelleinrichtungen sowie denselben zugeordnete Mess- und Regelungstechnik zurückgreifen zu müssen. Des Weiteren können durch vorstehende Maßnahme allein durch Wahl einer Spoilerlippe aus der Mehrzahl bereitgestellter Spoilerlippen auch bestimmte Designwünsche einfach und kostengünstig realisiert werden. Zum anderen ergibt sich durch diese Maßnahme ein Spoiler-Grundkörper, der leicht herzustellen und zu montieren ist und bei minimiertem Gewicht infolge des gebildeten geschlossenen Hohlprofils eine hohe Steifigkeit aufweist.

Die Unteransprüche beschreiben bevorzugte Weiterbildungen oder Ausgestaltungen der Erfindung.

Danach sind die Spoilerlippen jeweils durch ein Profilelement gebildet. Vorteilhaft weisen besagte Profilelemente eine hohe Eigensteifigkeit auf und ermöglichen dadurch einen vorbestimmten, definierten Einfluss auf besagte Aerodynamik und das Fahrverhalten des Fahrzeugs. Wie die Erfindung weiter vorsieht, weisen die Spoilerlippen zur Beeinflussung der aerodynamischen Eigenschaften des Fahrzeugs eine unterschiedliche Profilform auf, die sich beispielsweise an den aktuell gewünschten Fahrbetrieb des Fahrzeugs orientiert. So kann bei sportlichen Fahrzeugvarianten oder sportlich betriebenen Fahrzeugen ein andere Profilform gewählt bzw. bevorzugt sein als bei einem umweltbewussten Betreiben eines Fahrzeugs. Um einen schnellen und komfortablen Austausch der zugeordneten oder zuordenbaren respektive bereitgestellten Spoilerlippen zu ermöglichen, sind die Spoilerlippen bevorzugt durch Formschluss lösbar mit dem Spoiler-Grundkörper verbunden oder verbindbar. Die Erfindung beschränkt sich jedoch nicht auf besagte Lösbarkeit, sondern erfasst auch Spoilerlippen, die mit dem Spoiler-Grundköper fest verbunden, beispielsweise verklebt sind, wobei aus der Mehrzahl bereitgestellter unterschiedlicher Spoilerlippen eine auf einen konkreten respektive vorbestimmten Fahrbetrieb und/oder konkreten Designwunsch konkret abgestimmte Spoilerlippe gewählt wird. Um bei hoher Formhaltigkeit eine bestimmte Oberflächenqualität und/oder ein bestimmtes Design bereitstellen zu können, sind die Spoilerlippen weiter bevorzugt aus einem Kunststoffverbund gebildet. In umfangreichen Versuchen zum Anmeldungsgegenstand hat sich als Kunststoffverbund PC-PET MD15 (PC=Polycarbonat; PET= Polyethylenterephthalat) besonders bewährt. Eine aus einem derartigen Kunststoffverbund bestehende Spoilerlippe kann beispielsweise nach einem an sich bekannten Zwei- oder Mehrkomponenten-Kunststoff-Spritzgießverfahren hergestellt sein. Ein hierzu alternativer Kunststoffverbund kann beispielsweise auch durch ein PC-ABS (PC=Polycarbonat; ABS= Acrylnitril-Butadien-Styrol-Copolymerisat) gebildet sein. In Fortbildung der Erfindung ist vorgesehen, dass in demselben, insbesondere in dessen Spoiler-Grundkörper, zumindest eine Heckleuchte integriert ist. Hierdurch übernimmt der Heckspoiler in vorteilhafter Weise zusätzlich eine Haltefunktion für die zumindest eine Heckleuchte. Die zumindest eine Heckleuchte ist bevorzugt durch eine Bremsleuchte gebildet, da der Heckspoiler im Allgemeinen in erhöhter Position an der Fahrzeugkarosserie oder der Heckklappe oder Hecktür angeordnet ist.

Die Erfindung betrifft auch Fahrzeug, insbesondere Kraftfahrzeug, mit einem Heckspoiler der vorbeschriebenen Art.

Nachstehend wird die Erfindung anhand eines in den Zeichnungen schematisch dargestellten Ausführungsbeispiels näher erläutert. Sie ist jedoch nicht auf dieses beschränkt, sondern erfasst alle durch die Patentansprüche definierten Ausgestaltungen. Es zeigen:
- Fig. 1: äußerst schematisch ein mit einem erfindungsgemäß ausgebildeten Heckspoiler ausgestattetes Fahrzeug in einer Seitenansicht, und
- Fig. 2: eine Schnittdarstellung des Heckspoilers nach Fig. 1.

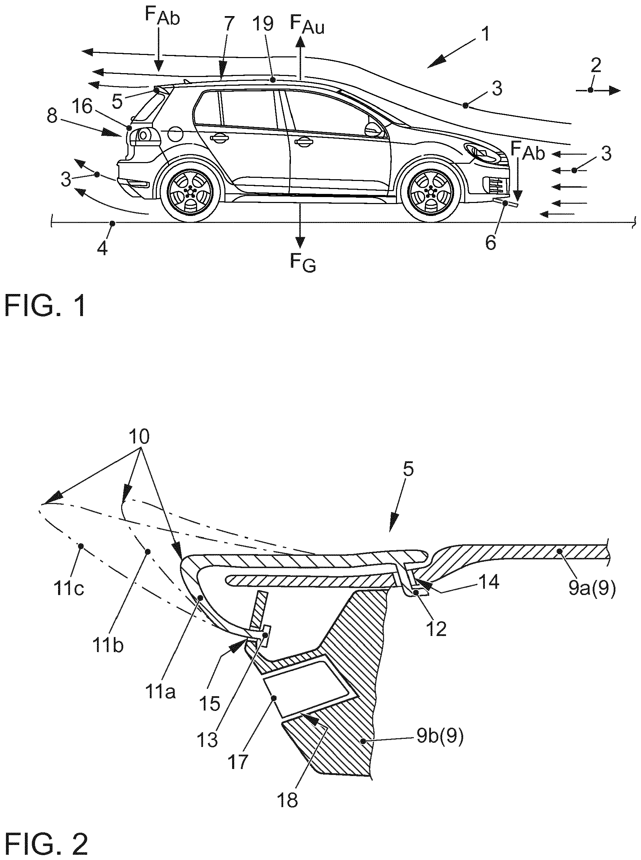

Fig. 1 zeigt zunächst ein Fahrzeug 1, vorliegend ein Kraftfahrzeug in Form eines Personenkraftwagens, welches/r sich gemäß dem Fahrtrichtungs-Pfeil 2 in Vorwärtsfahrt befindet. Während der Fahrt bildet sich um das Fahrzeug 1 ein Luftstrom 3 aus. Es ist bekannt, dass zum einen während der Fahrt des Fahrzeugs 1 als Folge der Umströmung durch besagten Luftstrom 3 Auftriebs- und Abtriebskräfte "F_{Au}", "F_{Ab}" entstehen, die auf das Fahrzeug 1 wirken und zum anderen die Summe aller senkrecht wirkenden Kräfte aus Gewichtskraft "F_{G}" des Kraftfahrzeugs 1, Auftriebskraft "F_{Au}" und Abtriebskraft "F_{Ab}" bewirken soll, dass das Fahrzeug 1 auf dem Fahrplanum 4 nicht den Bodenkontakt verliert.

Um sowohl die Aerodynamik des Fahrzeugs 1 und somit auch dessen Kraftstoffverbrauch als auch das Fahrverhalten des Fahrzeugs 1 bezüglich bestimmter Fahrzustände, wie beispielsweise Geradeausfahrt, Kurvenfahrt etc., vorteilhaft beeinflussen zu können, verfügt das Fahrzeug 1 über einen Heckspoiler 5 und einen Frontspoiler 6.

Die nachfolgend beschriebene Erfindung befasst sich im Wesentlichen mit dem Heckspoiler 5. Bei besagtem Heckspoiler 5 handelt es sich um ein quer zur Fahrzeuglängsrichtung verlaufendes Profil, welches gemäß diesem Ausführungsbeispiel starr mit einer Heckklappe 16 des Fahrzeugs 1 verbunden ist, bei Vorwärtsfahrt entgegen der Fahrtrichtung (Pfeil 2) vom Luftstrom 3 umströmt wird und dadurch eine Abtriebskraft "F_{Ab}" auf das Fahrzeugheck 8 ausübt.

Gemäß Fig. 2 weist der Heckspoiler 5 einen mit der Heckklappe 16 des Fahrzeugs 1 unmittelbar verbundenen Spoiler-Grundkörper 9 auf, dem lediglich beispielgebend drei gegeneinender austauschbare, eine Windabrisskante 10 ausbildende Spoilerlippen 11a, 11b, 11c zugeordnet oder zuordenbar sind. In Fig. 2 sind die Spoilerlippen 11b und 11c äußerst schematisch anhand ihrer Außenkontur dargestellt (strich-punktierte bzw. strich-doppeltpunktierte Linienführung).

Die Spoilerlippen 11a, 11b, 11c sind jeweils durch ein Profilelement gebildet. Die Profilelemente sind vorliegend jeweils als offenes Hohllprofil ausgebildet, welches sich im Querschnitt gesehen an ein U- oder V-Profil anlehnt. Allein durch diese Maßnahme weisen die Profilelemente eine hohe Eigensteifigkeit auf und ermöglichen dadurch einen vorbestimmten, definierten Einfluss auf besagte Aerodynamik und das Fahrverhalten des Fahrzeugs 1. Durch die unterschiedliche gewählte Profilform respektive den unterschiedlich gewählten Profilquerschnitt der Spoilerlippen 11a, 11b, 11c sind die aerodynamischen Eigenschaften des Fahrzeugs 1 im Hinblick auf den aktuell gewünschten Fahrbetrieb desselben beeinflussbar bzw. veränderbar. Bevorzugt bestehen die Spoilerlippen 11a, 11b, 11c aus einem Kunststoffverbund. In oben bereits erwähnten umfangreichen Versuchen zum Anmeldungsgegenstand hat sich als Kunststoffverbund PC-PET MD15 (PC=Polycarbonat; PET= Polyethylenterephthalat) besonders bewährt. Eine aus einem derartigen Kunststoffverbund bestehende Spoilerlippe 11a, 11b, 11c kann beispielsweise nach einem an sich bekannten Zwei- oder Mehrkomponenten-Kunststoff-Spritzgießverfahren hergestellt sein (nicht zeichnerisch dargestellt). Ein hierzu alternativer Kunststoffverbund kann beispielsweise auch durch ein PC-ABS (PC=Polycarbonat; ABS= Acrylnitril-Butadien-Styrol-Copolymerisat) gebildet sein.

Die Spoilerlippen 11a, 11b, 11c sind vorliegend durch Formschluss lösbar mit dem Spoiler-Grundkörper 9 verbunden. Hierzu verfügt eine jede Spoilerlippe 11a, 11b, 11c über bevorzugt einstückig mit denselben ausgebildete, beispielsweise im Rahmen des oben erwähnten Kunststoff-Spritzgießverfahren angespritzte Formschlusselemente 12, 13 in Form zumindest eines Hakenelements und zumindest eines Rast- bzw. Clipelements, welche jeweils mit einem Formschlussgegenelement 14, 15 des Spoiler-Grundkörpers 9 korrespondieren. Die besagten Formschlussgegenelemente 14, 15 sind vorliegend durch geeignete Aufnahmeöffnungen im Spoiler-Grundkörper 9 gebildet. Die Montage der betreffenden Spoilerlippe 11a, 11b, 11c erfolgt zweckmäßigerweise derart, dass zunächst das Hakenelement derselben in die zugeordnete Aufnahmeöffnung des Spoiler-Grundkörpers 9 eingefädelt und nachfolgend das Rast- bzw. Clipelement in der zugeordneten Aufnahmeöffnung des Spoiler-Grundkörpers 9 verrastet bzw. eingeclipst wird.

Die Erfindung beschränkt sich jedoch nicht auf die bevorzugte formschlüssige Fügeverbindung zwischen der aktuell gewählten Spoilerlippe 11a, 11b, 11c und dem Spoiler-Grundkörper 9, sondern erfasst jedwede andere lösbare Fügemaßnahme, beispielsweise durch Kraftschluss mittels Befestigungsschrauben oder durch eine Kombination aus Kraft- und Formschluss (nicht zeichnerisch dargestellt).

Darüber hinaus ist auch eine unlösbare oder weitestgehend unlösbare Fügeverbindung, beispielsweise infolge Klebung, durch die Erfindung mit erfasst (nicht zeichnerisch dargestellt). Eine solche Fügeverbindung ist beispielsweise angezeigt, wenn aus der Mehrzahl bereitgestellter unterschiedlicher Spoilerlippen 11a, 11b, 11c eine auf einen konkreten respektive vorbestimmten Fahrbetrieb und/oder konkreten Designwunsch konkret abgestimmte Spoilerlippe 11a, 11b, 11c gewählt wird und ein späterer Austausch nicht erforderlich oder gewünscht ist.

Der Spoiler-Grundkörper 9 kann einstückiger Bestandteil der Heckklappe 16 oder als Anbauteil ausgebildet sein. Was die Materialwahl anbelangt, kann dieser aus Metall, aus Kunststoff oder einem Verbundwerkstoff, wie beispielsweise einem faserverstärkten Kunststoff bestehen.

Gemäß diesem Ausführungsbeispiel ist der Spoiler-Grundkörper 9 durch ein oberes und ein unteres Schalenelement 9a, 9b gebildet, welche sowohl untereinander als auch mit der Heckklappe 16 (vgl. Fig. 1) fest verbunden sind. Die Schalenelemente 9a, 9b sind derart untereinander gefügt, dass ein geschlossenes Hohlprofil mit seinen bereits oben beschriebenen Vorteilen gebildet ist. Das obere Schalenelement 9a weist dabei zumindest ein Formschlussgegenelement 14 (Aufnahmeöffnung) auf, wogegen zumindest ein Formschlussgegenelement 15 (Aufnahmeöffnung) im unteren Schalenelement 9b ausgebildet wird.

Wie der Fig. 2 weiter zu entnehmen ist, ist im Spoiler-Grundkörper 9 eine Heckleuchte 17, bevorzugt in Form einer Bremsleuchte integriert, da der Heckspoiler 5 im Allgemeinen in erhöhter Position, vorliegend in einem oberen Bereich der Heckklappe 16 angeordnet ist und über den erforderlichen Bauraum verfügt. Eine hierzu erforderliche Öffnung 18 im Spoiler-Grundkörper 9 wird durch dessen unteres Schalenelement 9b gebildet.

Das vorstehend beschriebene Ausführungsbeispiel befasst sich mit einem Heckspoiler 5, welcher mit einer Heckklappe 16 des Fahrzeugs 1 starr verbunden ist. Die Erfindung beschränkt sich jedoch nicht auf diese konkrete Anordnung des Heckspoilers 5, sondern erfasst auch einen Heckspoiler 5, der beispielsweise an einer Hecktür oder unmittelbar an der Fahrzeugkarosserie 7, insbesondere am Fahrzeugdach 19 derselben befestigt ist (nicht zeichnerisch dargestellt).

### Bezugszeichenliste

- 1: Fahrzeug
- 2: Fahrtrichtung
- 3: Luftstrom
- 4: Fahrplanum
- 5: Heckspoiler
- 6: Frontspoiler
- 7: Fahrzeugkarosserie
- 8: Fahrzeugheck
- 9: Spoiler-Grundkörper
- 9a: oberes Schalenelement
- 9b: unteres Schalenelement
- 10: Windabrisskante
- 11a: Spoilerlippe
- 11b: Spoilerlippe
- 11c: Spoilerlippe
- 12: Formschlusselement
- 13: Formschlusselement
- 14: Formschlussgegenelement
- 15: Formschlussgegenelement
- 16: Heckklappe
- 17: Heckleuchte
- 18: Öffnung
- 19: Fahrzeugdach
- "F_{Au}": Auftriebskraft
- "F_{Ab}": Abtriebskraft
- "F_{G}": Gewichtskraft

## Patentansprüche

1. Heckspoiler (5) für ein Fahrzeug (1), insbesondere Kraftfahrzeug, welcher mit einer Fahrzeugkarosserie (7) oder einer Hecklappe (16) oder Hecktür des Fahrzeugs (1) starr verbunden ist, wobei der Heckspoiler (5) einen Spoiler-Grundkörper (9) aufweist, dem zwei oder mehr, jeweils eine Windabrisskante (10) ausbildende Spoilerlippen (11a, 11b, 11c) zugeordnet oder zuordenbar sind, aus denen gewählt werden kann oder welche gegeneinander austauschbar sind, **dadurch gekennzeichnet, dass** der Spoiler-Grundkörper (9) durch zwei Schalenelemente (9a, 9b) gebildet ist, die sowohl untereinander als auch mit der Fahrzeugkarosserie (7) oder der Hecklappe (16) oder Hecktür des Fahrzeugs (1) starr verbunden sind und ein geschlossenes Hohlprofil ausbilden.

2. Heckspoiler (5) nach Anspruch 1, **dadurch gekennzeichnet, dass** die Spoilerlippen (11a, 11b, 11c) jeweils durch ein Profilelement gebildet sind.

3. Heckspoiler (5) nach Anspruch 1 oder 2, **dadurch gekennzeichnet, dass** die Spoilerlippen (11a, 11b, 11c) zur Beeinflussung der aerodynamischen Eigenschaften des Fahrzeugs (1) eine unterschiedliche Profilform aufweisen.

4. Heckspoiler (5) nach einem der Ansprüche 1 bis 3, **dadurch gekennzeichnet, dass** die Spoilerlippen (11a, 11b, 11c) durch Formschluss lösbar mit dem Spoiler-Grundkörper (9) verbunden oder verbindbar sind.

5. Heckspoiler (5) nach einem der Ansprüche 1 bis 4, **dadurch gekennzeichnet, dass** die Spoilerlippen (11a, 11b, 11c) aus einem Kunststoffverbund gebildet sind.

6. Heckspoiler (5) nach Anspruch 5, **dadurch gekennzeichnet, dass** besagter Kunststoffverbund PC-PET MD15 (PC=Polycarbonat; PET= Polyethylenterephthalat) oder PC-ABS (PC=Polycarbonat; ABS= Acrylnitril-Butadien-Styrol-Copolymerisat) ist.

7. Heckspoiler (5) nach einem der Ansprüche 1 bis 6, **dadurch gekennzeichnet, dass** in den Heckspoiler (5) zumindest eine Heckleuchte (17) integriert ist.

8. Heckspoiler (5) nach Anspruch 7, **dadurch gekennzeichnet, dass** die zumindest eine Heckleuchte (17) durch eine Bremsleuchte gebildet ist.

9. Fahrzeug (1), insbesondere Kraftfahrzeug, mit einem Heckspoiler (5) nach einem der Ansprüche 1 bis 8.

## Claims

1. Rear spoiler (5) for a vehicle (1), in particular a motor vehicle, which rear spoiler is rigidly connected to a vehicle body (7) or a tailgate (16) or rear door of the vehicle (1), the rear spoiler (5) having a spoiler base body (9) to which two or more spoiler lips (11a, 11b, 11c) are assigned or assignable which respectively form a wind separating edge (10) and from which a selection can be made or which can be exchanged for one another, **characterized in that** the spoiler base body (9) is formed by two shell elements (9a, 9b), which are rigidly connected both to one another and to the vehicle body (7) or to the tailgate (16) or rear door of the vehicle (1) and form a closed hollow profile.

2. Rear spoiler (5) according to Claim 1, **characterized in that** the spoiler lips (11a, 11b, 11c) are each formed by a profile element.

3. Rear spoiler (5) according to Claim 1 or 2, **characterized in that** the spoiler lips (11a, 11b, 11c) have a different profile shape to influence the aerodynamic properties of the vehicle (1).

4. Rear spoiler (5) according to any of Claims 1 to 3, **characterized in that** the spoiler lips (11a, 11b, 11c) are detachably connected or connectable to the spoiler base body (9) by positive locking.

5. Rear spoiler (5) according to any of Claims 1 to 4, **characterized in that** the spoiler lips (11a, 11b, 11c) are formed from a plastic composite.

6. Rear spoiler (5) according to Claim 5, **characterized in that** said plastic composite is PC-PET MD15 (PC=polycarbonate; PET=polyethylene terephthalate) or PC-ABS (PC=polycarbonate; ABS=acrylonitrile butadiene styrene copolymerisate).

7. Rear spoiler (5) according to any of Claims 1 to 6, **characterized in that** at least one tail lamp (17) is integrated into the rear spoiler (5).

8. Rear spoiler (5) according to Claim 7, **characterized in that** the at least one tail lamp (17) is formed by a brake light.

9. Vehicle (1), in particular a motor vehicle, having a rear spoiler (5) according to any of Claims 1 to 8.

## Revendications

1. Becquet arrière (5) pour un véhicule (1), en particulier un véhicule à moteur, lequel est raccordé de manière rigide à une carrosserie de véhicule (7) ou à un hayon (16) ou à une porte arrière du véhicule (1), dans lequel le becquet arrière (5) comporte un corps de base de becquet (9) auquel au moins deux lèvres de becquet (11a, 11b, 11c), formant respectivement un bord coupe-vent (10), sont attribuées ou peuvent être attribuées, parmi lesquelles il est possible de choisir ou qui sont interchangeables, **caractérisé en ce que** le corps de base de becquet (9) est formé au moyen de deux éléments de coque (9a, 9b), lesquels sont raccordés de manière rigide l'un à l'autre ainsi qu'à la carrosserie du véhicule (7) ou au hayon (16) ou à la porte arrière du véhicule (1) et forment un profilé creux fermé.

2. Becquet arrière (5) selon la revendication 1, **caractérisé en ce que** les lèvres de becquet (11a, 11b, 11c) sont respectivement formées au moyen d'un élément profilé.

3. Becquet arrière (5) selon la revendication 1 ou 2, **caractérisé en ce que** les lèvres de becquet (11a, 11b, 11c), pour influencer les propriétés aérodynamiques du véhicule (1), présentent une forme de profilé différente.

4. Becquet arrière (5) selon l'une quelconque des revendications 1 à 3, **caractérisé en ce que** les lèvres de becquet (11a, 11b, 11c) sont raccordées ou peuvent être raccordées par complémentarité de forme de manière détachable au corps de base de becquet (9).

5. Becquet arrière (5) selon l'une quelconque des revendications 1 à 4, **caractérisé en ce que** les lèvres de becquet (11a, 11b, 11c) sont formées d'un composite de matière plastique.

6. Becquet arrière (5) selon la revendication 5, **caractérisé en ce que** ledit composite de matière plastique est un PC-PET MD15 (PC = polycarbonate ; PET = polyéthylène téréphtalate) ou un PC-ABS (PC = polycarbonate ; ABS = copolymère acrylonitrile-butadiène-styrène).

7. Becquet arrière (5) selon l'une quelconque des revendications 1 à 6, **caractérisé en ce que,** dans le becquet arrière (5), au moins un feu arrière (17) est intégré.

8. Becquet arrière (5) selon la revendication 7, **caractérisé en ce que** l'au moins un feu arrière (17) est formé au moyen d'un feu-stop.

9. Véhicule (1), en particulier un véhicule à moteur, doté d'un becquet arrière (5) selon l'une quelconque des revendications 1 à 8.
